# EUROPÄISCHE PATENTSCHRIFT

(11) **EP 2 653 416 B1**
(45) Veröffentlichungstag und Bekanntmachung des Hinweises auf die Patenterteilung: **21.01.2015**
(21) Anmeldenummer: 12002771.9
(22) Anmeldetag: 20.04.2012
(51) Int. Cl.: B25J 15/00, B25J 15/02, B65G 47/90

(54) **Greifeinrichtung zum Greifen von Objekten**
Gripper device for gripping objects
Dispositif de saisie destiné à saisir des objets

(43) Veröffentlichungstag der Anmeldung: 23.10.2013
(73) Patentinhaber: Festo AG & Co. KG, 73734 Esslingen (DE)
(72) Erfinder: Thallemer, Axel, 80796 München (DE); Danzer, Martin, 81929 München (DE); Diensthuber, Dominik, 4652 Fischlham (AT); Kostadinov, Aleksandar, 4614 Marchtrenk (AT)
(74) Vertreter: Vogler, Bernd

(56) Entgegenhaltungen:
- EP-A1- 0 941 951
- WO-A1-2010/108662
- US-A1- 2002 005 646

## Beschreibung

Die Erfindung betrifft eine Greifeinrichtung zum Greifen von Objekten, mit wenigstens einer Krafteinleitungsschnittstelle, an der ein Antrieb zur Greifkrafterzeugung ankoppelbar oder angekoppelt ist, und mit einem Gelenkgetriebe aus wenigstens einem Trägerteil und mehreren mittels Gelenken gelenkig miteinander verbundenen Getriebegliedern zur Übertragung der Greifkraft auf wenigstens ein auf das zu greifenden Objekt beim Greifen einwirkendes Greifelement, nach dem einleitenden Teil des Anspruchs 1, wie sie aus der EP-A-0 941 951 bekannt ist.

Greifeinrichtungen bzw. Greifer, die auf dem Prinzip der Watt schen oder Stephenson'schen Kopplung basieren, sind bereits bekannt. Bei einer Watt'schen Kette handelt es sich um eine sechsgliedrige kinematische Kette mit einem Freiheitsgrad. Die Watt'sche Kette weist zwei starre Dreiecke auf, die jeweils ein Getriebeglied eines Gelenkgetriebes bilden. Die starren Dreiecke sind jeweils aus drei zueinander ortsfest angeordnete Gelenke aufgespannt, wobei die beiden starren Dreiecke im Fall der Watt'schen Kette über ein Gelenk miteinander gekoppelt sind, d.h. ein Gelenk des einen starren Dreiecks ist auch ein Gelenk des anderen starren Dreiecks. Es handelt sich also hierbei um eine Dreieckskopplung an einem Punkt.

Bei der Stephenson'schen Kette handelt es sich ebenfalls um eine sechsgliedrige kinematische Kette. Es sind ebenfalls zwei starre Dreiecke vorgesehen, die jedoch im Unterschied zur Watt'schen Kette über eine Strecke, d.h. über ein weiteres Getriebeglied miteinander gekoppelt sind.

Gelenkgetriebe, die als Watt'sche oder Stephenson'schen Kette ausgebildet sind, erzeugen eine definierte Greifbewegung.

Aufgabe der Erfindung ist es, eine Greifeinrichtung der eingangs erwähnten Art zu schaffen, die gegenüber den aus dem Stand der Technik bekannten Greifeinrichtungen bezüglich der Greifbewegung variabler und somit flexibler einsetzbar ist.

Diese Aufgabe wird durch eine Greifeinrichtung mit den Merkmalen des unabhängigen Anspruchs 1 gelöst. Weiterbildungen der Erfindung sind in den Unteransprüchen dargestellt.

Die erfindungsgemäße Greifeinrichtung zeichnet sich dadurch aus, dass von den Gelenken des Gelenkgetriebes drei relativ zueinander ortsfest am Träger angeordnet sind.

Durch die Anordnung der Gelenke am Trägerteil ergibt sich insgesamt gegenüber den aus dem Stand der Technik bekannten Greifeinrichtungen, die als Watt'schen oder Stephenson'schen Kette ausgebildet sind, ein kompakterer Aufbau, was sich günstig auf die Baugröße der Greifeinrichtung auswirkt. Ferner lässt sich durch die als Fixpunkte fungierenden Gelenke am Trägerteil bei geringerer Baugröße ein größerer Öffnungswinkel der Greifeinrichtung realisieren. Infolge der geringeren Baugröße, verbunden mit dem größeren Öffnungswinkel, bietet die erfindungsgemäße Greifeinrichtung gegenüber den aus dem Stand der Technik bekannten Greifeinrichtungen ein breiteres Anwendungsspektrum.

Bei einer Weiterbildung der Erfindung ist von den Getriebegliedern wenigstens eines, insbesondere ein einziges, durch ein mittels dreier relativ zueinander ortsfester Gelenke gebildetes starres Dreieck gebildet. Zweckmäßigerweise umfasst das Gelenkgetriebe der erfindungsgemäßen Greifeinrichtung nur ein einziges starres Dreieck und unterscheidet sich auch dadurch von den aus dem Stand der Technik bekannten Watt'schen oder Stehphenson'schen Ketten, die jeweils zwei starre Dreiecke aufweisen. Bei der erfindungsgemäßen Greifeinrichtung hingegen ist eines der beiden starren Dreiecke aufgetrennt und wird durch die am Trägerteil angeordneten Gelenke ersetzt. Dadurch wird eine Art Dreistandkoppelgetriebe gebildet, das sich durch die vorerwähnten Vorteile in Baugröße und Flexibilität auszeichnet.

Bei einer Weiterbildung der Erfindung ist von den das starre Dreieck bildenden Gelenken wenigstens eines, insbesondere ein einziges, am Trägerteil angeordnet.

Bei einer Weiterbildung der Erfindung liegen die Getriebeglieder und die Gelenke des Gelenkgetriebes in einer gemeinsamen Ebene. In diesem Fall kann die Greifeinrichtung auch als ebener Greifer bezeichnet werden.

In besonders bevorzugter Weise sind von den drei am Trägerteil angeordneten Gelenken an zweien, Greiforgane bildende Getriebeglieder angelenkt, die zwischen einer das Objekt greifenden Greifstellung und einer Freigabestellung relativ beweglich zueinander angeordnet sind. Die Greiforgane bilden wichtige Komponenten des Gelenkgetriebes, da sie die Greifbewegung und auch die Greifkraft auf die an den Greiforganen angeordneten Greifelemente übertragen, die ihrerseits wiederum auf das zu greifende Objekt einwirken.

Die Befestigung der Greifelemente am zugeordneten Greiforgan ist vorzugsweise lösbar, wodurch eine optimale Anpassung der aktiven Wirkfläche am Greifelement an die passive Wirkfläche am Objekt durch den Einsatz des geeigneten Greifelements möglich ist.

Bei einer Weiterbildung der Erfindung sind die Greiforgane jeweils um das ihnen zugeordnete Gelenk am Trägerteil mit diesem Gelenk als Schwenkachse schwenkbeweglich gelagert.

Besonders zweckmäßig ist es, falls entlang einer Verbindungslinie, die die drei am Trägerteil angeordneten Gelenke miteinander verbindet, zwei der Gelenke als äußere und das dazwischen liegende als mittleres Gelenk zu bezeichnen sind, wobei die Greiforgane an den äußeren Gelenken angelenkt sind. Hierdurch wird also eine Art Zangengreifer gebildet.

Es ist möglich, dass eines der das starre Dreieck bildende Gelenke das mittlere Gelenk ist.

Bei einer Weiterbildung der Erfindung ist eines der Greiforgane insbesondere deutlich kürzer als das andere Greiforgan ausgebildet.

Zweckmäßigerweise befindet sich die Krafteinleitungsschnittstelle an einem der Greiforgane. In diesem Fall wird die Kraft also direkt am Greiforgan eingeleitet und nicht über andere Getriebeglieder des Gelenkgetriebes übersetzt an das Greiforgan abgegeben.

In besonders bevorzugter Weise ist wenigstens ein Antrieb vorgesehen, der einerseits am Trägerteil und andererseits an der Krafteinleitungsschnittstelle am Greiforgan angekoppelt ist.

Besonders bevorzugt handelt es sich bei dem Antrieb um einen Linearantrieb. Es ist jedoch auch möglich, Drehantriebe zu verwenden, deren rotatorische Antriebsbewegung dann über geeignete Umsetzmittel in eine lineare Abtriebsbewegung übersetzbar ist.

In besonders bevorzugter Weise handelt es sich bei dem Linearantrieb um einen Kontraktionsantrieb. Der Kontraktionsantrieb besitzt in bevorzugter Weise zwei Kopfstücke, zwischen denen ein sich bei Innendruckbeaufschlagung kontrahierender Kontraktionsschlauch angeordnet ist. Der Schlauchkörper des Kontraktionsschlauchs ist mit integrierten Zugsträngen versehen.

Bei einer Weiterbildung der Erfindung bestehen die Komponenten des Gelenkgetriebes zumindest teilweise aus Leichtbaumaterial. Das Leichtbaumaterial kann ein Metallmaterial oder Kunststoffmaterial sein. Im Falle von Metallmaterial eignen sich beispielsweise Aluminium, Magnesium oder deren Legierungen. Es ist möglich, eine Kombination verschiedener Materialien zu verwenden.

In besonders bevorzugter Weise sind zumindest die Greiforgane, vorzugsweise sämtliche Komponenten des Gelenkgetriebes, mit insbesondere schwammartigen Material-Ausmagerungen versehen. Dadurch lässt sich das Gewicht der Greifeinrichtung beträchtlich reduzieren. Zweckmäßigerweise sind die Material-Ausmagerungen in Kraftflussrichtung der mittels des Antriebs erzeugten Greifkraft ausgerichtet.

Bevorzugte Ausführungsbeispiele der Erfindung sind in der Zeichnung dargestellt und werden im Folgenden näher erläutert. In der Zeichnung zeigen:
- Figur 1: eine schematische Darstellung eines ersten Ausführungsbeispiels der erfindungsgemäßen Greifeinrichtung und
- Figur 2: eine schematische Darstellung eines zweiten Ausführungsbeispiels der erfindungsgemäßen Greifeinrichtung.

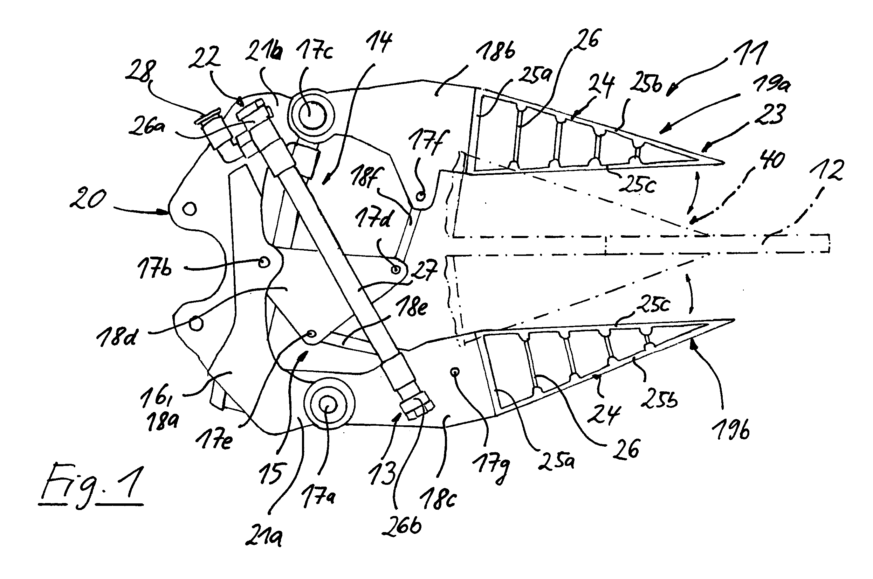

Figur 1 zeigt ein erstes Ausführungsbeispiel der erfindungsgemäßen Greifeinrichtung 11. Die Greifeinrichtung 11 dient zum Greifen von Objekten 12 unterschiedlicher Art, wobei gemäß erstem Ausführungsbeispiel insbesondere flächige Objekte 12 vorgesehen sind, da die Greifeinrichtung 11 gemäß dem ersten Ausführungsbeispiel, wie nachstehend noch erläutert, hauptsächlich mit einem Liniengriff greift.

Die Greifeinrichtung 11 befindet sich in der Regel an einem Handhabungsgerät (nicht dargestellt), das auch als Greiferführungsgetriebe bezeichnet werden kann. Die Hauptaufgaben der Greifeinrichtung sind das Herstellen, Aufrechterhalten und Lösen der Verbindung zwischen dem Objekt 12 und dem Handhabungsgerät. Je nach Anwendungsfall kommen zusätzliche Sonderfunktionen wie Änderung der Position des Objekts, Änderung der Orientierung des Objekts und/oder Informationsaufnahme von Objekteigenschaften oder anderen Eigenschaften, beispielsweise mit Hilfe von Sensoren hinzu. Es können beispielsweise Anwesenheitskontrolle und Lageerkennung für Objekte, sowie Kraft-, Momenten- und Wegmessungen durchgeführt werden.

Die Greifeinrichtung 11 besitzt wenigstens eine, im Beispielsfall eine einzige Krafteinleitungsschnittstelle 13, an der ein Antrieb 14 zur Greifkrafterzeugung ankoppelbar oder angekoppelt ist. Die Greifeinrichtung 11 umfasst ferner ein Gelenkgetriebe 15 aus wenigstens einem Trägerteil 16 und mehreren mittels Gelenken 17a-g gelenkig miteinander verbundenen Getriebegliedern 18a-f zur Übertragung der Greifkraft und der Greifbewegung auf wenigstens ein auf das zu greifende Objekt 12 beim Greifen einwirkendes Greifelement 19a, 19b, wobei das Gelenkgetriebe 15 nach Art einer Watt'schen oder Stephenson'schen Kette ausgebildet ist.

Bei einer Watt'schen Kette handelt es sich um eine sechsgliedrig kinematische Kette mit sechs Getriebegliedern 18a-f, die jeweils durch Gelenke 17a-g gelenkig miteinander verbunden sind. Charakteristikum der Watt'schen Kette ist das Vorhandensein zweier starrer Dreiecke, die jeweils mittels dreier relativ zueinander ortsfester Gelenke gebildet werden. Bei der Watt'schen Kette sind die beiden starren Dreiecke in einem Gelenk miteinander gekoppelt. Man spricht hier auch von einer Dreieckskopplung an einem Punkt.

Bei der Stephenson'schen Kette handelt es sich ebenfalls um eine sechsgliedrige kinematische Kette mit sechs Getriebegliedern 18a-f, die jeweils über Gelenke 18a-g gelenkig miteinander verbunden sind. Auch hier sind zwei jeweils mittels dreier relativ zueinander ortsfester Gelenke gebildete starre Dreiecke vorgesehen. Im Gegensatz zur Watt'schen Kette werden die beiden starren Dreiecke jedoch nicht an einem Punkt, sondern über die Strecke miteinander gekoppelt, also über ein Getriebeglied.

Grundsätzlich werden die starren Dreiecke, die in der Getriebelehre auch als Scheiben bezeichnet werden, als ein Getriebeglied gezählt.

Wie in Figur 1 dargestellt, besitzt das Trägerteil 16 des Gelenkgetriebes 15 beispielsweise eine wippenartige Ausgestaltung. An einer Rückseite des Trägerteils 16 ist eine Montageschnittstelle 20 ausgebildet, über die die Greifeinrichtung 11 an der nicht dargestellten Handhabungseinrichtung montierbar ist. Von besonderer Bedeutung ist, dass an dem Trägerteil 16 von den Gelenken 17a-g drei relativ zueinander ortsfest angeordnet sind. Legt man durch die drei Gelenke 17a-c eine Verbindungslinie, so lassen sich die Gelenke in zwei äußere Gelenke 17a, 17c und ein mittleres Gelenk 17b unterteilen. Die beiden äußeren Gelenke 17a, 17c befinden sich im dargestellten Beispielsfall an den beiden einander gegenüberliegenden Schenkel 21a, 21b des Trägerteils, während sich das mittlere Gelenk 17b ungefähr in der Mitte zwischen den beiden äußeren Gelenken 17a, 17c befindet. Am Trägerteil befindet sich ferner noch eine Befestigungsschnittstelle 22 zur Befestigung des Antriebs 14, der nachfolgend noch näher beschrieben wird.

Charakteristikum des in Figur 1 dargestellten Greifers ist, dass eines der beiden gemäß der Watt'schen Kette vorgesehenen starren Dreiecke aufgetrennt ist, wobei dessen Gelenke 17a-c als Fixpunkte an dem Trägerteil 16 angeordnet sind. Dadurch wird eine Art Dreistandkoppelgetriebe gebildet. Das übriggebliebene starre Dreieck, das eines der Getriebeglieder 18d des Gelenkgetriebes 15 bildet, ist über das mittlere Gelenk 17b am Trägerteil 16 angelenkt. Das Trägerteil bildet ebenfalls ein Getriebeglied 18a des Gelenkgetriebes 15.

An den beiden äußeren Gelenken 17a, 17c ist jeweils ein Greiforgan angeordnet. Die Greiforgane bilden ebenfalls Getriebeglieder 18b, 18c des Gelenkgetriebes 15. Die Greiforgane sind um eine durch die äußeren Gelenke 17a, 17c gebildete Schwenkachse schwenkbar am Trägerteil gelagert und können zwischen einer das Objekt 12 greifenden Greifstellung 40 und einer Freigabestellung 23 relativ zueinander verschwenkt werden. Die dadurch erzeugte Greifbewegung ist eine Art Zangengriff. An dem Greiforgan ist jeweils ein Greifelement 19a, 19b lösbar befestigt, dass gemäß Figur 1 rein beispielhaft in Form einer nach Art einer Flossenstrahlanordnung ausgebildeten Greifstruktur ausgestaltet ist. Diese stegartige Greifstruktur besteht aus einem flexiblen Material, wobei ein spitzwinkelig dreiecksförmiger Rahmen 24 vorgesehen ist, der aus drei Rahmenstegen 25a-c aufgebaut ist. Von den Rahmenstegen 25a-c bildet einer die Basis, während die beiden anderen sich von dieser konvergierend erstrecken und sich in der Dreiecksspitze treffen. Zwischen den beiden konvergierenden Rahmenstegen 25b, 25c erstrecken sich in etwa parallel zum Basis-Rahmensteg 25a Verbindungsstäbe 26, die jeweils einerseits an einem Rahmensteg 25b und andererseits am anderen Rahmensteg 25c schwenkbeweglich gelagert sind. Durch diese Ausgestaltung ist eine Relativbewegung der beiden Rahmenstege 25b, 25c zueinander möglich, wodurch die durch diese Greifstruktur gebildete aktive Wirkfläche sich optimal an die am Objekt 12 ausgebildete passive Wirkfläche anpassen kann.

Wie in Figur 1 gezeigt, ist durch das Bewegen der beiden Greiforgane in die Greifstellung ein flächiges Anliegen der Greifstruktur an ein flächiges Objekt 12 nach Art eines Liniengriffs möglich.

Neben den beiden am Trägerteil ausgebildeten äußeren Gelenken 17a, 17c besitzen die Greiforgane jeweils noch ein weiteres Gelenk 17f, 17g, an dem ein weiteres Getriebeglied in Form eines Hebels 18e, 18f angelenkt ist. Diese Getriebeglieder 18e, 18f sind jeweils über ein weiteres Gelenk 17d, 17e am starren Dreieck angelenkt.

Das ein Getriebeglied 18d des Gelenkgetriebes 15 bildende starre Dreieck ist wie erwähnt über das mittlere Gelenk 17b am Trägerteil 16 angelenkt. Es besteht insgesamt aus drei relativ zueinander ortsfesten Gelenken 17b, 17d, 17e, wobei das der Hypothenuse des Dreiecks gegenüberliegende Gelenk 17e, das auch die Dreiecksspitze bildet, in Richtung eines der beiden Greiforgane ausgerichtet ist. Insgesamt könnte man hier auch von einem liegenden starren Dreieck sprechen, da die Dreiecksspitze nicht nach vorne, sondern zur Seite ausgerichtet ist.

Bei dem Antrieb 14 handelt es sich um einen Linearantrieb in Form eines Kontraktionsantriebs. Der Kontraktionsantrieb ist einerseits über die Befestigungsschnittstelle 22 am Trägerteil 16 und andererseits über die Krafteinleitungsschnittstelle 13 an einem der beiden Greiforgane gelagert. Der Kontraktionsantrieb besitzt zwei einander entgegengesetzte Kopfstücke 26a, 26b, zwischen denen sich ein mittels Innendruckbeaufschlagung sich kontrahierender Kontraktionsschlauch 27 eingespannt ist. In den Schlauchkörper des Kontraktionsschlauchs 27 sind Zugstränge integriert, wodurch bewirkt wird, dass sich der Kontraktionsschlauch 27 bei Innendruckbeaufschlagung kontrahiert, also zusammenzieht. Zum Greifen eines Objekts 12 wird der Kontraktionsantrieb, der über einen Druckluftanschluss 28 an eine Druckluftquelle angeschlossen ist, mit Druck beaufschlagt. Die Innendruckbeaufschlagung des Kontraktionsschlauchs 27 bewirkt eine Kontraktion, wobei sich der Kontraktionsschlauch 27 verkürzt und sich die beiden Kopfstücke 26a, 26b einander annähern. Durch die Kontraktion wird das angekoppelte Greiforgan um das äußere Gelenk 17a nach innen geschwenkt. Da dieses Greiforgan über das Gelenkgetriebe 15 mit dem anderen Greiforgan gekoppelt ist und das Gelenkgetriebe 15 einen Freiheitsgrad besitzt, folgen die an das Greiforgan angekoppelten anderen Getriebeglieder 18d-f dieser Bewegung zwangläufig, wodurch auch das andere Greiforgan nach innen schwenkt. Die beiden, an den Greiforganen angeordneten Greifelemente, legen sich dann an die passive Wirkfläche des Objekts an, wodurch das Objekt gegriffen ist.

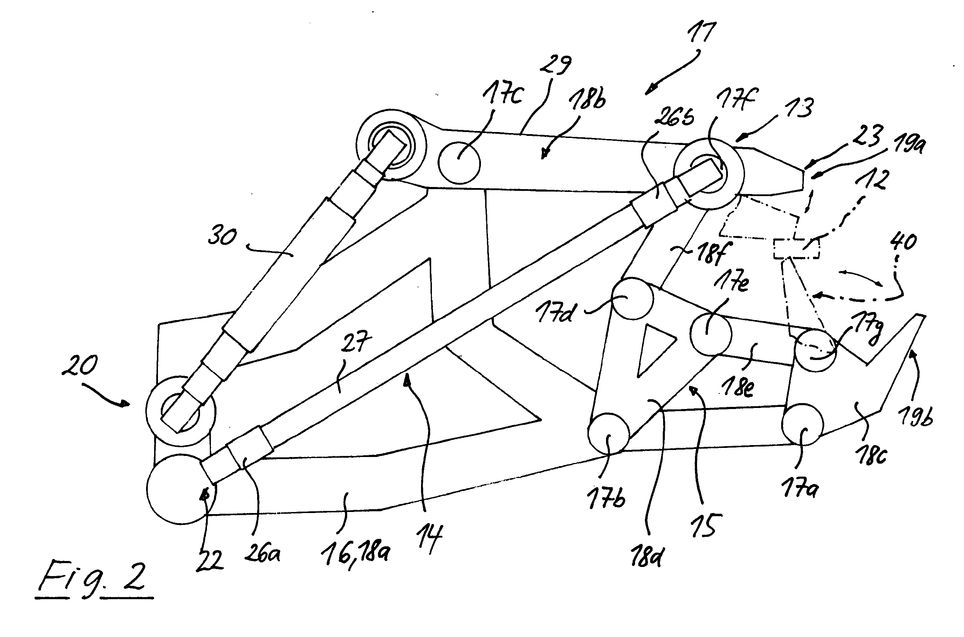

Figur 2 zeigt ein zweites Ausführungsbeispiel der erfindungsgemäßen Greifeinrichtung, das sich vom ersten Ausführungsbeispiel insbesondere durch die Ausgestaltung des Trägerteils 16 sowie der Greiforgane und den Greifelementen 19a, 19b unterscheidet. Auch hier sind am Trägerteil 16 drei Gelenke 17a, 17b, 17c angeordnet, die als äußere Gelenke 17a, 17c und mittleres Gelenk 17b zu bezeichnen sind. Der Antrieb 14 ist wiederum zwischen einer Befestigungsschnittstelle 22 am Trägerteil 16 und einer Krafteinleitungsschnittstelle 13 an einem der beiden Greiforgane gelagert. Er ist ebenfalls als Kontraktionsantrieb ausgestaltet. An das mittlere Gelenk 17b ist das starre Dreieck angelenkt, das über weitere Gelenke 17d, 17e mit weiterem Getriebegliedern 18f, 18e gelenkig gekoppelt ist, die wiederum über Gelenke 17f, 17g gelenkig mit den Greiforganen verbunden sind.

Die beiden Greiforgane unterscheiden sich hauptsächlich in deren Länge. Eines der beiden Greiforgane ist ein relativ langer Hebel, der um das äußere Gelenk 17a schwenkbar gelagert ist. Dieses Greiforgan, das auch ein Getriebeglied 18b des Gelenkgetriebes 15 ist, ist über dieses äußere Gelenk 17a hinaus verlängert, wobei sich an diesem Fortsatz 29 eine Angriffsstelle für ein Rückstellelement, das beispielsweise in Form einer Feder ausgestaltet sein kann, befindet. Das Rückstellelement 30 ist andererseits über eine weitere Angriffsstelle am Trägerteil 16 gelagert. Das andere Greiforgan ist gegenüber dem bereits beschriebenen Greiforgan wesentlich kürzer ausgebildet und ist nach einer Art eines Winkelstücks ausgestaltet. Im Gegensatz zum zuvor beschriebenen ersten Ausführungsbeispiel befinden sich bei der Greifeinrichtung 11 gemäß zweitem Ausführungsbeispiel an den Greiforganen keine separaten Greifelemente, sondern die Greifelemente bzw. die aktiven Wirkflächen werden durch die Greiforgane selber gebildet.

Zum Greifen eines Objekts wird der Kontraktionsschlauch 27 mit Innendruck beaufschlagt, was dessen Verkürzung bewirkt, wodurch sich die beiden Kopfstücke 26a, 26b einander annähern. Dadurch wird das längere Greiforgan um das äußere Gelenk 17a nach innen verschwenkt und kommt mit der passiven Wirkfläche des zu greifenden Objekts 12 in Kontakt. Gleichzeitig wird über die angekoppelten Getriebeglieder auch ein Verschwenken des kürzeren Greiforgans nach innen bewirkt, so dass auch dieses mit der passiven Wirkfläche des zu greifenden Objekts 12 in Kontakt kommt. Charakteristikum dieser Greifeinrichtung 11 ist, dass der Kontakt zwischen den beiden Greiforganen und dem zu greifenden Objekt 12 eher punktförmig ausgestaltet ist, während ja gemäß dem ersten Ausführungsbeispiel ein Liniengriff verwirklicht ist.

## Patentansprüche

1. Greifeinrichtung zum Greifen von Objekten (12), mit wenigstens einer Krafteinleitungsschnittstelle (13), an der ein Antrieb (14) zur Greifkrafterzeugung ankoppelbar oder angekoppelt ist, und mit einem Gelenkgetriebe (15) aus wenigstens einem Trägerteil (16) und mehreren mittels Gelenken (17a-g) gelenkig miteinander verbundenen Getriebegliedern (18a-f) zur Übertragung der Greifkraft auf wenigstens ein auf das zu greifenden Objekt (12) beim Greifen einwirkendes Greifelement (19a, 19b), **dadurch gekennzeichnet, dass** das Gelenkgetriebe (15) nach Art einer Watt'schen oder Stephenson'schen sechsgliedrigen (18a-f) kinematischen Kette ausgebildet ist, wobei die Kette zwei starre Dreiecke aufweist und wobei von den Gelenken (17a-c) drei relativ zueinander ortsfest am Trägerteil (16) angeordnet sind.

2. Greifeinrichtung nach Anspruch 1, **dadurch gekennzeichnet, dass** von den Getriebegliedern (18a-f) wenigstens eines, insbesondere ein einziges, durch ein mittels dreier relativ zueinander ortsfester Gelenke (17a-g) gebildetes starres Dreieck gebildet ist.

3. Greifeinrichtung nach Anspruch 2, **dadurch gekennzeichnet, dass** von den das starre Dreieck bildenden Gelenken (17b, 17d, 17e) wenigstens eines, insbesondere ein einziges, am Trägerteil (16) angeordnet ist.

4. Greifeinrichtung nach einem der vorhergehenden Ansprüche, **dadurch gekennzeichnet, dass** die Getriebeglieder (18a-f) und die Gelenke (17a-g) des Gelenkgetriebes (15) in einer gemeinsamen Ebene liegen.

5. Greifeinrichtung nach einem der vorhergehenden Ansprüche, **dadurch gekennzeichnet, dass** von den drei am Trägerteil (16) angeordneten Gelenken (17a-c) an zweien Greiforgane bildende Getriebeglieder (18b, 18c) angelenkt sind, die zwischen einer das Objekt (12) greifenden Greifstellung (22) und einer Freigabestellung (23) relativ beweglich zueinander angeordnet sind.

6. Greifeinrichtung nach Anspruch 5, **dadurch gekennzeichnet, dass** an den Greiforganen jeweils wenigstens eines der Greifelemente (19a, 19b) angeordnet, insbesondere lösbar befestigt ist.

7. Greifeinrichtung nach Anspruch 5 oder 6, **dadurch gekennzeichnet, dass** die Greiforgane jeweils um das ihnen zugeordnete Gelenk (17a, 17c) am Trägerteil (16) mit diesem Gelenk (17a, 17c) als Schwenkachse schwenkbeweglich gelagert sind.

8. Greifeinrichtung nach einem der Ansprüche 5 bis 7, **dadurch gekennzeichnet, dass** entlang einer Verbindungslinie, die die drei am Trägerteil (16) angeordneten Gelenke (17a, 17c) miteinander verbindet, zwei der Gelenke (17a, 17c) als äußere und das dazwischen liegende als mittleres Gelenk (17b) zu bezeichnen sind, wobei die Greiforgane (18b, 18c) an den äußeren Gelenken (17a, 17c) angelenkt sind.

9. Greifeinrichtung nach Anspruch 8, **dadurch gekennzeichnet, dass** eines der das starre Dreieck bildende Gelenke das mittlere Gelenk (17b) ist.

10. Greifeinrichtung nach einem der Ansprüche 5 bis 9, **dadurch gekennzeichnet, dass** eines der Greiforgane insbesondere deutlich kürzer als das andere Greiforgan ausgebildet ist.

11. Greifeinrichtung nach einem der Ansprüche 5 bis 10, **dadurch gekennzeichnet**, das sich die Krafteinleitungsschnittstelle (13) an einem der Greiforgane befindet.

12. Greifeinrichtung nach einem der vorhergehenden Ansprüche, **dadurch gekennzeichnet, dass** wenigstens ein Antrieb (14) vorgesehen ist, der einerseits am Trägerteil (16) und andererseits an der Krafteinleitungsschnittstelle (13) am Greiforgan angekoppelt ist.

13. Greifeinrichtung nach Anspruch 12, **dadurch gekennzeichnet, dass** es sich bei dem Antrieb um einen Linearantrieb handelt.

14. Greifeinrichtung nach Anspruch 13, **dadurch gekennzeichnet, dass** der Linearantrieb als Kontraktionsantrieb ausgebildet ist.

15. Greifeinrichtung nach einem der vorhergehenden Ansprüche, **dadurch gekennzeichnet, dass** die Komponenten des Gelenkgetriebes (15) zumindest teilweise aus Leichtbaumaterial bestehen.

16. Greifeinrichtung nach einem der vorhergehenden Ansprüche, **dadurch gekennzeichnet, dass** zumindest die Greiforgane, vorzugsweise sämtliche Komponenten des Gelenkgetriebes (15), insbesondere schwammartige Material-Ausmagerungen aufweisen.

17. Greifeinrichtung nach Anspruch 16, **dadurch gekennzeichnet, dass** die Material-Ausmagerungen in Kraftflussrichtung der mittels des Antriebs (14) erzeugten Greifkraft ausgerichtet sind.

## Claims

1. Gripping device for gripping objects (12), comprising at least one force introduction interface (13) to which a drive (14) for generating a gripping force can be or is coupled, and further comprising an articulation transmission mechanism (15) made up of at least one support part (16) and a plurality of transmission links (18a-f) pin-connected to one another by means of joints (17a-g) for the transmission of the gripping force to at least one gripping element (19a, 19b) acting on the object (12) to be gripped in the gripping process, **characterised in that** the articulation transmission mechanism (15) is designed in the manner of a six-link (18a-f) kinematic Watt or Stephenson chain, the chain comprising two rigid triangles and three of the joints (17a-c) being located on the support part (16) while being stationary relative to one another.

2. Gripping device according to claim 1, **characterised in that** at least one, in particular a single one, of the transmission links (18a-f), is represented by a rigid triangle formed from three joints (17a-g) which are stationary relative to one another.

3. Gripping device according to claim 2, **characterised in that** at least one, in particular a single one, of the joints (17b, 17d, 17e) forming the rigid triangle is located on the support part (16).

4. Gripping device according to any of the preceding claims, **characterised in that** the transmission links (18a-f) and the joints (17a-g) of the articulation transmission mechanism (15) lie in a common plane.

5. Gripping device according to any of the preceding claims, **characterised in that** on two of the three joints (17a-c) located on the support part (16), transmission links (18b, 18c), which form gripping organs and which are arranged to be movable relative to one another between a gripping position (22) and a release position (23), are hinge-mounted.

6. Gripping device according to claim 5, **characterised in that** at least one of the gripping elements (19a, 19b) is located on each of the ripping organs, being in particular releasably attached.

7. Gripping device according to claim 5 or 6, **characterised in that** each of the gripping organs is mounted on the support part (16) for pivoting about the associated joint (17a, 17c), the joint (17a, 17c) acting as a pivot axis.

8. Gripping device according to any of claims 5 to 7, **characterised in that**, along a connecting line which connects the three joints (17a, 17c) located on the support part (16) to one another, two of the joints (17a, 17c) are to be described as outer joints and the joint (17b) located in between is to be described as middle joint, the gripping organs being hinge-mounted on the outer joints (17a, 17c).

9. Gripping device according to claim 8, **characterised in that** one of the joints forming the rigid triangle is the middle joint (17b).

10. Gripping device according to any of claims 5 to 9, **characterised in that** one of the gripping organs is shorter, in particular significantly shorter, than the other gripping organ.

11. Gripping device according to any of claims 5 to 10, **characterised in that** the force introduction interface (13) is located on one of the gripping organs.

12. Gripping device according to any of the preceding claims, **characterised in that** at least one drive (14) is provided, which is coupled to the gripping organ at the support part (16) on the one hand and at the force introduction interface (13) on the other hand.

13. Gripping device according to claim 12, **characterised in that** the drive is a linear drive.

14. Gripping device according to claim 13, **characterised in that** the linear drive is designed as a contraction drive.

15. Gripping device according to any of the preceding claims, **characterised in that** the components of the articulation transmission mechanism (15) are at least partially made of a light-weight material.

16. Gripping device according to any of the preceding claims, **characterised in that** at least the gripping organs and preferably all components of the articulation transmission mechanism (15) have weakened material areas which are in particular sponge-like.

17. Gripping device according to claim 16, **characterised in that** the weakened material areas are oriented in the direction of the flow of the gripping force generated by means of the drive (14).

## Revendications

1. Dispositif de préhension servant à saisir des objets (12), comprenant au moins une interface d'application de force (13), à laquelle un entraînement (14) servant à produire la force de préhension peut être couplé ou est couplé, et comprenant un mécanisme articulé (15) constitué d'au moins une partie de support (16) et de plusieurs membres de mécanisme (18a - 18f) reliés les uns aux autres de manière articulée au moyen d'articulations (17a - 17g) et servant à transmettre la force de préhension sur au moins un élément de préhension (19a, 19b) agissant sur l'objet (12) à saisir lors de la préhension, **caractérisé en ce que** le mécanisme articulé (15) est réalisé à la manière d'une chaîne cinématique de Watt ou de Stephenson à six membres (18a - 18f), sachant que la chaîne présente deux triangles rigides et sachant que parmi les articulations (17a - 17c), trois articulations sont disposées au niveau de la partie de support (16) de manière stationnaire les uns par rapport aux autres.

2. Dispositif de préhension selon la revendication 1, **caractérisé en ce qu'**au moins un triangle, en particulier un unique triangle rigide formé au moyen de trois articulations (17a - 17g) stationnaires les unes par rapport aux autres, est formé par les membres de mécanisme (18a - 18f).

3. Dispositif de préhension selon la revendication 2, **caractérisé en ce que** parmi les articulations (17b, 17d, 17e) formant le triangle rigide, au moins une articulation, en particulier une seule articulation, est disposée au niveau de la partie de support (16).

4. Dispositif de préhension selon l'une quelconque des revendications précédentes, **caractérisé en ce que** les membres de mécanisme (18a - 18f) et les articulations (17a - 17g) du mécanisme articulé (15) se trouvent dans un plan commun.

5. Dispositif de préhension selon l'une quelconque des revendications précédentes, **caractérisé en ce que** des membres de mécanisme (18b, 18c) formant des organes de préhension sont articulés au niveau de deux des trois articulations (17a - 17c) disposées au niveau de la partie de support (16), lesquels membres de mécanisme sont disposés de manière à pouvoir être déplacés les uns par rapport aux autres entre une position de préhension (22) saisissant l'objet (12) et une position de libération (23).

6. Dispositif de préhension selon la revendication 5, **caractérisé en ce que** respectivement un des éléments de préhension (19a, 19b) est disposé, en particulier est fixé de manière amovible, au niveau des organes de préhension.

7. Dispositif de préhension selon la revendication 5 ou 6, **caractérisé en ce que** les organes de préhension sont logés de manière à pouvoir être déplacés par pivotement respectivement autour de l'articulation (17a, 17c), qui leur est associée, au niveau de la partie de support (16) à l'aide de ladite articulation (17a, 17c) faisant office d'axe de pivotement.

8. Dispositif de préhension selon l'une quelconque des revendications 5 à 7, **caractérisé en ce qu'**il convient de désigner le long d'une ligne de jonction, qui relie les unes aux autres les trois articulations (17a, 17c) disposées au niveau de la partie de support (16), deux des articulations (17a, 17c) comme articulations extérieures et l'articulation située entre ces deux dernières comme articulation centrale (17b), sachant que les organes de préhension (18b, 18c) sont articulés au niveau des articulations (17a, 17c) extérieures.

9. Dispositif de préhension selon la revendication 8, **caractérisé en ce que** l'une des articulations formant le triangle rigide est l'articulation centrale (17b).

10. Dispositif de préhension selon l'une quelconque des revendications 5 à 9, **caractérisé en ce que** l'un des organes de préhension est réalisé en particulier de manière à être nettement plus court que l'autre organe de préhension.

11. Dispositif de préhension selon l'une quelconque des revendications 5 à 10, **caractérisé en ce que** l'interface d'application de force (13) se trouve au niveau de l'un des organes de préhension.

12. Dispositif de préhension selon l'une quelconque des revendications précédentes, **caractérisé en ce qu'**au moins un entraînement (14) est prévu, lequel est couplé au niveau de l'organe de préhension, d'une part au niveau de la partie de support (16) et d'autre part au niveau de l'interface d'application de force (13).

13. Dispositif de préhension selon la revendication 12, **caractérisé en ce que** l'entraînement est un entraînement linéaire.

14. Dispositif de préhension selon la revendication 13, **caractérisé en ce que** l'entraînement linéaire est réalisé sous la forme d'un entraînement de contraction.

15. Dispositif de préhension selon l'une quelconque des revendications précédentes, **caractérisé en ce que** les composants du mécanisme articulé (15) sont constitués au moins en partie d'un matériau de construction légère.

16. Dispositif de préhension selon l'une quelconque des revendications précédentes, **caractérisé en ce qu'**au moins les organes de préhension, de préférence tous les composants du mécanisme d'articulation (15), présentent en particulier des érosions de matériau de type éponge.

17. Dispositif de préhension selon la revendication 16, **caractérisé en ce que** les érosions de matériau sont orientées dans la direction de flux de force de la force de préhension produite au moyen de l'entraînement (14).
